(19) Europäisches Patentamt / European Patent Office / Office européen des brevets

(11) **EP 2 551 801 A1**

(12) **EUROPEAN PATENT APPLICATION**

(43) Date of publication:
**30.01.2013 Bulletin 2013/05**

(51) Int Cl.:
***G06Q 10/00*** *(2012.01)*

(21) Application number: **11175977.5**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Heinecke, Georg**
  **39345 Flechtingen (DE)**
• **Lamparter, Steffen**
  **81671 München (DE)**
• **Lepratti, Raffaello**
  **10117 Berlin (DE)**

(54) **Processing a technical system**

(57) It is proposed to determine the criticality of a supply chain's read points, i.e. to determine which of the read points are most critical and are more required than others. This allows adjusting the supply chain accordingly, i.e. using the most critical read points and/or providing read points at locations that are most significant with regard to a target objective (e.g., in-time delivery). A simulation allows comparing various approaches of read point installments and compares the findings of the simulation with each other. This helps with regard to the target objective providing an efficient supply chain monitoring thereby reducing the likelihood for false alarms. The invention is applicable for all kinds of technical systems, e.g., industry and automation systems, in particular processing or delivery systems.

FIG 3

$$\sum_{m+1}^{M} \overline{CT}_m \quad 302$$

$$\sum_{m+1}^{M} r_m \quad 301$$

$$304 \quad \sigma_m$$

$$\overline{CT}_m \qquad \overline{CT}_{m+1}$$

$$r_0 \cdots r_{m-1} \qquad r_m \qquad r_{m+1} \quad r_{m+2} \cdots r_M \qquad t$$

$$g_{r_m} = \overline{CT}_m + \overline{CT}_{m+1} \quad 303$$

EP 2 551 801 A1

**Description**

The invention relates to a method and to a device for processing a technical system, in particular a manufacturing or a delivering system or supply chain comprising several stages. The technical system comprises several read points for monitoring information of the technical system, in particular with regard to a work product that is (to be) processed by the technical system.

Globalization and lean production make supply chains (SC) increasingly complex and efficient, but also prone to events that have a negative impact on the supply chain and in particular endanger its ability to deliver products in time.

Real-time tracking and tracing systems (e.g., RFID-based) can help making supply chains more robust by identifying (undesired) events and enabling early responses that are capable of mitigating their adverse effects.

Events may be compensated as long as they have sufficiently limited impact and are apparent to the system. Hence, SC transparency becomes a critical issue and real-time monitoring systems (e.g. RFID-based) a prerequisite.

However, read points for real-time tracking and tracing are placed merely in a few default locations (e.g., receiving of the work product and shipping of the work product) without further considerations.

Although desirable, continuous SC monitoring is technically and economically not feasible. Thus, locations for suitable read points have to be identified. However, not all points along the supply chain allow for equally important observations of critical effects.

Multi-criteria decision models (MCDM) are known as tools that assist a decision maker to choose, rank, or sort alternatives within a finite set according to two or more criteria.

[1] describes a weighted linear optimization model (R-model) that is similar to a class of linear programming models used in data envelopment analysis (DEA). The R-model enables each item to select its own weights for estimating its score. However, the R-model could lead to a situation where an item that has a high value assigned to an unimportant criterion is classified inappropriately. It allows several scores with the maximum value "1", which limits further distinction. [2] suggests a revised model compared to [1]. Both models described in [1] and [2] have the advantages that they are intuitive and, due to items selecting their own weights, can be fully automated. The models can be utilized for addressing various decision problems.

Hence, it is the objective to provide an approach that allows determining where to place read points in a technical system, e.g., along a supply chain, and in particular to provide a measure to determine which read points are more (most) efficient compared to other read points.

This problem is solved according to the features of the independent claims. Further embodiments result from the depending claims.

In order to overcome this problem, a method is provided for processing a technical system,

- wherein a set of read points is determined;
- wherein at least one criterion for the read points is selected;
- wherein an efficiency of the read points with regard to the at least one criterion is determined;
- wherein the technical system is processed pursuant to the efficiency of the read points.

The solution presented can be applied to various technical systems, in particular to components or machines of technical systems which are mapped to a common model.

The technical system may in particular process a work product along several stages, wherein the stages may have an impact on the target objective. The read points may monitor the work product and/or the target objective along the stages of the technical system and/or together with the work product.

The work product can be a work piece, a (customer) order, a manufacturing item, etc.

The read point may be any monitoring point in or along the technical system. It may comprise an optical sensor, an RFID sensor, a camera, an infrared sensor, a measurement device or any other sensor that allows detecting or monitoring a portion of the technical system, in particular with regard to the work product. Various characteristics or parameters of the work product can be determined at the read point, e.g., time-based information (time of arrival or departure, time of passing a sensor), temperature, quality-based information (quality information may also be derived from other parameters), etc. The read point can be provided at a fixed location of the technical system and convey a monitored signal to a processing entity, e.g., an engineering tool. The read point may be to some extent (e.g., partially) moveable, in particular together or along with the work product.

Hence, the solution presented allows finding efficient read points along a supply chain. It is also possible to determine where to place such read points to provide good monitoring capability. In particular, an existing supply chain or a supply chain to be provided or amended can use the approach presented herein to deploy read points at valuable positions.

In this regard, the approach suggests placing read points that provide most efficient monitoring results and thus allows not having to install or dismount read points at positions that are less valuable. It is in particular an advantage that the solution presents a ranking of read points according to different criteria that are deemed decisive for a particular supply chain. For example, the n best read points of such ranking can be used, e.g., installed in the technical system.

The solution presented allows considering various target objectives, e.g., time, cost and/or quality-related objectives. A progression of a work product along the technical system can be monitored in intervals that can be separated by read points. By combining several criteria using weighted linear optimization models, a set of read points can be determined, in particular selected, that enables identification of critical deviations while minimizing false alarms of the technical system

For example, the performance of the models can be compared with a benchmark model via a static threshold of the target objective for which a deviation is considered to be critical.

Hence, a simulation can be conducted that aims in particular at identification of critical time deviations by determining a promising set of read points which can be selected and/or deployed in a structured way using weighted linear optimization models. In other words, the most promising and appropriate read points in the technical system, e.g. a supply chain or a manufacturing or delivery system is determined.

The efficiency can also be regarded as "criticality", which can be determined by at least one weighted optimization model (see below) .

In an embodiment, processing the technical system comprises at least one of the following:

- a simulation of the technical system;
- a deployment of the technical system or a portion thereof;
- a modification of the technical system;
- a design or a re-design of the technical system
- mounting or demounting the read points determined pursuant to their efficiency.

In another embodiment, the at least one criterion comprises:

- an amount of remaining read points;
- a remaining processing time from the actual read point to the target date;
- a visibility gap, in particular a sum of an average cycle time of an interval before the actual read point and after the actual read point;
- a variability of a time interval, in particular a standard deviation of a preceding time interval.

The criteria can be used in an R-model approach and/or a Z-model approach, to obtain an optimized read point; in particular the read points can be sorted according to combined criteria. In other words, using a weighted linear optimization model, a sorted list of most promising read points can be produced (based on the criteria selected) and the n best read points of such sorted list can be used. It is also a solution that several simulations are run with various control parameters and/or criteria in order to find out which set of read points provide the best results (based on the criteria selected). In other words, different subsets of selections of read points can be used to determine a score based on said criteria. The scores can be compared and a decision can be made which of the subsets provides the best performance. For comparison purposes, metrics can be used such as hit rate and miss rate which may indicate a performance dependent on the actual model and/or subset used.

In a further embodiment, the efficiency of the read points with regard to the at least one criterion is determined using a weighted optimization model.

The weighted optimization model may be a weighted linear optimization model, e.g. an R-model or a Z-model. The R-model and the Z-model can be combined via a control parameter.

In a next embodiment, the read points are ranked based on the weighted optimization model.

It is also an embodiment that the efficiency of the set of read points or of a subset of this set of read points is determined with regard to the at least one criterion via a simulation.

Hence different subsets (selections) of the set of read points (including the original set of read points) can be compared in terms of score based on the weighted optimization model using in particular several of the aforementioned criteria. Comparing the subsets allows determining which selection of read points performs best in view of a target objective (see below).

Pursuant to another embodiment, said simulation is conducted with different control parameters, wherein the control parameter indicates an R-model and/or a Z-model portion of the weighted optimization model.

According to an embodiment, the set of read points is at least partially a set of read points of the technical system.

Hence, the solution presented may be based on existing read points and assumed read points; hence the simulation may at least partially be based on a real deployment of read points.

According to another embodiment, the efficiency of the read points with regard to the at least one criterion is determined based on different subsets of the set of read points.

Hence, selections of the read points could be determined and for each selection (i.e. subset) their efficiency can be determined. Various runs for different subsets of read points can be compared with each other and the subset with the best efficiency can, e.g., be used as read points of the technical system.

In yet another embodiment, the efficiency is determined with regard to a target objective, wherein said target objective comprises at least one of the following:

- a time objective;
- a cost objective;
- a quality objective.

Hence, the efficiency may indicate a transparency of the technical system and allows for a suitable sensitivity of the technical system, e.g., with regard to alarms indicating an early but likely deviation from the target objective.

According to a next embodiment, the technical system comprises at least one of the following:

- a supply chain;
- a production system or process,
- a manufacturing system or process,
- a delivery system or process,
- an automation system or process.

Pursuant to yet an embodiment, a stage of the technical system comprises at least one of the following:

- a component of the technical system;
- a machine;
- a material processing or conveying unit;
- a storage unit;
- a processing device;
- an automation device.

The problem stated above is also solved by a device for processing a technical system comprising a processing unit that is arranged for

- determining a set of read points;
- selecting at least one criterion for the read points;
- determining an efficiency of the read points with regard to the at least one criterion;
- processing the technical system pursuant to the efficiency of the read points.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

According to an embodiment, the device communicates with or is part of an engineering tool.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein. Furthermore, the problem stated above is solved by a system comprising at least one device as described herein.

The aforementioned characteristics, features and advantages of the invention as well as the way they are achieved will be further illustrated in connection with the following examples and considerations as discussed in view of the figures.

Fig.1     shows a generic, serial process comprising several read points;

Fig.2     shows a table comprising entries for read points, criteria (score) and a criticality;

Fig.3    visualizes four criteria that can advantageously be used for ranking a read point;

Fig.4    shows a schematic representation of the simulation procedure;

Fig.5    shows a diagram for visualizing a classification of cycle times.

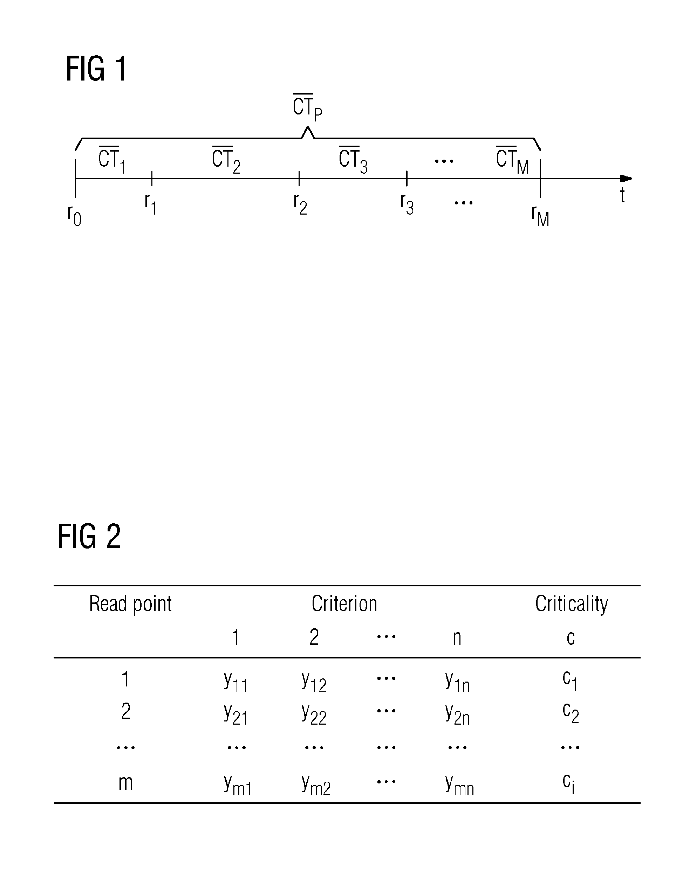

Fig.1 shows a generic, serial process comprising several read points $r_n$ (n=0...M) . The process can be a part of a technical system, in particular a supply chain, a manufacturing system, a delivery system or the like.

The M read points are separated by M intervals. Each interval may have an average cycle time amounting to $\overline{CT}_m$ (m=1...M) and in particular with each interval being subject to a low variability (LV). Such LV can be the result of events that could delay or advance the arrival at a read point such as waiting time, set-up time, equipment failure, random noise, etc. The LV may result in a bell-shaped probability density function; hence - for simplification purposes - the processing time during each interval can be deemed normally distributed with a mean and standard deviation $\sigma_m$.

It is noted that the standard deviation $\sigma_m$ may lead to (critical) deviations in processing as they may accumulate over time.

The M intervals are separated by M+1 read points $r_{0...}r_M$. A scheduled target date $\overline{CT}_p$ is given by a time that is required on average to complete the process.

Based on such setup it is a practical constraint that an infinite number of read points cannot be deployed and monitored along the process. Hence, it has to be decided which read points to select, i.e. where to deploy read points and thus which read points allow an efficient monitoring of the process.

Weighted linear Model

In order to be able to select the most important read points, each read point is evaluated in view of N criteria as summarized in the table shown in Fig.2.

A criterion score of the m-th read point in terms of the n-th criterion is denoted as $y_{mn}$. As an example, the criteria are positive with regard to the criticality so they can be aggregated into a single score, denoted as individual criticality $c_m$ at the read point $r_m$.

The R-model according to [1] can be denoted as:

$$c_m^g = \max \sum_{n=1}^{N} w_{mn}^g y_{mn}$$

$$s.t. \sum_{n=1}^{N} w_{mn}^g y_{in} \le 1 \tag{1}$$

$$i = 1, 2, \ldots, M$$

$$w_{mn}^g \ge 0 \quad .$$

With the objective to maximize the criticality $c_i$ of a specific read point $p_i$, this optimization problem selects the highest possible values for the decision variables, i.e. the weights $w_{mn}$. These are limited by the constraint that the weighted sum, determined using the same set of weights, for all read points (i=1...M) is required to be less than or equal to 1.

Thus, if another read point has the combined value of 1, using the chosen set of weights $w_{mn}$ in conjunction with its own specific scores $y_{in}$, the criticality value $c_m$ of the actual read point cannot be further increased. In this way, each read point tries to select the most favorable weights $w_{mn}$ for its criterion scores $y_{mn}$ to achieve the highest possible criticality value $c_m$.

If due to this model a read point has the highest score $y_{mn}$ for one criterion (i.e. dominating all other scores $y_{in}$), this read point will receive a high criticality value $c_m$ regardless of its values for other criteria. The approach presented in [2] avoids this drawback. While the R-model pursuant to equation (1) helps selecting weights which are most favorable, a Z-model does the opposite and is defined as follows:

$$c_m^b = \min \sum_{n=1}^{N} w_{mn}^b y_{mn}$$

$$s.t. \sum_{n=1}^{N} w_{mn}^b y_{in} \geq 1 \qquad (2)$$

$$i = 1, 2, \ldots, M$$

$$w_{mn}^b \geq 0$$

Thus, the R-model and Z-model represent two opposite extremes, which according to [2] can be used as a composite index. Hence, indexes of the models can be combined via a control parameter $\lambda$ (with $0 \leq \lambda \leq 1$) that reflects the preferences of a particular decision maker (e.g., a process or an entity that actually conducts the decision making). In the two extreme cases ($\lambda=0$ and $\lambda=1$), the normalized scores of the original models are obtained. If a decision maker is neutral about the decision to make, $\lambda$ can be set to 0.5. This composite index allows for further distinction between the models and can be denoted as:

$$c_m^{\varepsilon}(\lambda) = \lambda \cdot \frac{c_m^{\vartheta} - \min_{m=1\ldots M}\{c_m^{\vartheta}\}}{\max_{m=1\ldots M}\{c_m^{\vartheta}\} - \min_{m=1\ldots M}\{c_m^{\vartheta}\}} +$$

$$\qquad (3)$$

$$+ (1 - \lambda) \cdot \frac{c_m^b - \min_{m=1\ldots M}\{c_m^b\}}{\max_{m=1\ldots M}\{c_m^b\} - \min_{m=1\ldots M}\{c_m^b\}}$$

Criteria

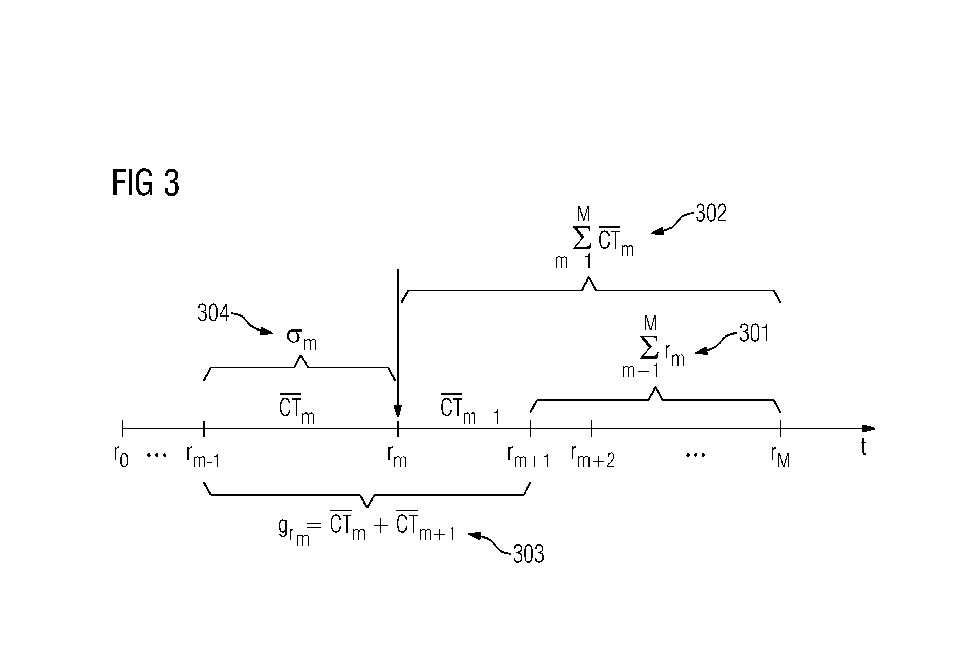

To use the models in an efficient manner, the N criteria that are used to calculate the criticality $c_m$ of each read point are to be determined. The criteria can be selected from various types or dimensions (e.g., time, quality, reliability, costs, etc.).
Advantageously, two constraints may be considered: First, criteria that are quantifiable are selected. Second, "positive criteria" are used, i.e. a higher score indicates a higher criticality. For inverse criteria, the reciprocals of the scores can be used.
As an example, time-related criteria are used. Advantageously, such criteria are easy to determine (measure) and other criteria (e.g., quality-related criteria) can be derived from the time-related criteria (e.g., an order that has to be reworked results in a delay).
Hence, depending on the requirements of the decision maker and/or the process, the composition of the final scores $c_m$ can be adapted by adding or removing criteria. Fig.3 shows four criteria 301 to 304 that can advantageously be used for ranking a read point $r_m$ and will be explained hereinafter:

(1) Target Date:

Read points closer to the target date are of greater importance than those further away (or: read points further away from the target date are less important than those close to it).
Basically, there is still time for an order to compensate its deviation without intervention if the target date is sufficiently far away. Hence, it becomes more apparent approaching the target date that a deviation is indeed critical.
Reactions to deviations at early stages of the process increase the amount of (suspected) events. An early monitoring and identification of such events is desirable, but it is difficult to assess a severity of an event, i.e. the impact of the event towards the target date, if it is sufficiently far away from this target date. In other words, an early event could be remedied before reaching the target date (because there may be sufficient time left until the target date; this time could be used for compensating measures). Unnecessary revisions of the original schedule based on early event recognition (i.e. events that could be remedied along the process) would result in an instable or fluctuant system.

However, time for and extent of an intervention becomes increasingly limited when the target date approaches. This significantly limits the flexibility to remedy an undesired event, e.g., a significant delay shortly before the target date.

In summary, the selection of read points should strike a balance between the ability of identifying critical deviations as early as possible and as late as necessary.

The first criterion 301 is determined as the amount of remaining read points. It is inversely related to the criticality, because the more future chances of intervention exist, the less critical process deviations exists at this particular point of the process. In short, if there is a sufficient amount of read points left before the target date is reached, the process may still be able to correct itself so that an intervention (e.g., a re-scheduling) is not required.

The second criterion 302 is the remaining processing time from the actual read point to the target date; this criterion is inversely related to the criticality: Read points that are closer to the target date are more critical as the range available for speeding up or slowing down the process becomes increasingly limited.

These two criteria are useful, because at a certain read point despite still being considerably long until reaching the target date, the process could be "blind", i.e. without further read points. If the remaining time was the only indicator, the importance of the last monitoring point before the target date would be underestimated. Hence, the number of remaining read points is a useful criterion to consider.

(2) Visibility Gap:

The longer a preceding interval, the higher the importance of the read point. This applies also for the length of a succeeding interval.

If the process is not monitored, uncertainty about the process, its work pieces, the order, etc. increases over time.

This "visibility gap" 303 can be expressed as the sum of the average cycle time CT of the two intervals that follow and precede one particular read point. The larger the gap, the more critical this read point becomes.

(3) Process Stability:

Stable stages of the processes are of less importance compared to those stages that show a high degree of variability.

Process intervals are not equally susceptible to deviations. For example, the likelihood of events with more serious effects is higher for just-in-sequence deliveries than for storage processes.

A variability is one indicator of deviation that may occur during a time interval. The variability can be expressed in various ways, e.g., by a (squared) coefficient of variation (CV), which can be defined as the standard deviation of an interval m divided by its mean.

Processes may show low variability (LV; i.e. deviations) in the case of CV being less than 0.75. However, since the CV measure normalizes variability across intervals, the same CV for two intervals might represent two very different standard deviations $\sigma_m$. This may indicate that an interval could have a decisive impact on the ability for an order to fulfill the target date, the standard deviation $\sigma_m$ (rather than the CV) of the preceding interval (fourth criterion 304) can be used as an indicator of the importance of the subsequent read point.

Simulation

As an example, the selection of read points can be evaluated for three control parameters ($\lambda$=0, 0.5, 1) in view of a random selection of read points.

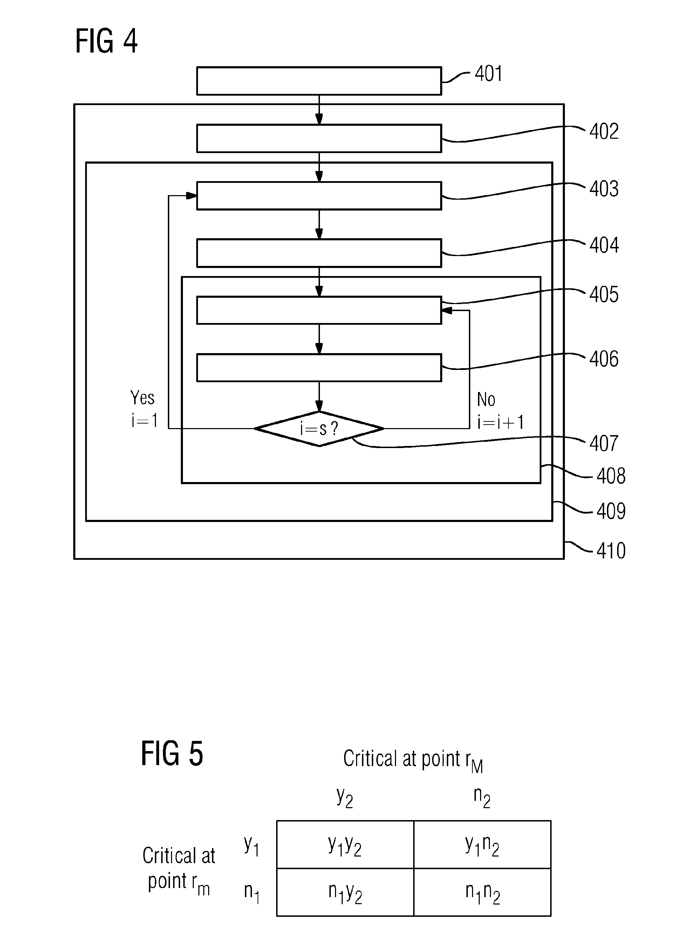

Fig.4 shows a schematic representation of the simulation procedure. In a step 401, constants are defined. For example, a process setup with 25 intervals (i.e. 26 read points) and a combined length of 5000 time units can be used. In a step 402, the 25 intervals are randomly assigned, average cycle time (CT) lengths (with a combined length of 5000 time units) and CV values in a range between 0.05 and 0.5 (which can be used for low variability processes) are determined. The CV values are used to derive the standard deviation. In as step 403, system variables are selected. The degree of process transparency is defined by the size of the selected subset of read points that are used for monitoring purposes. The subsets may contain 4, 6, and 8 read points. A system sensitivity is a factor v that is added and subtracted from the average, cumulated CT at the read point $r_m$ according to the following equation:

$$\sum_{m=1}^{m} \overline{CT}_m \times (1-v) \leq \sum_{m=1}^{m} CT_m^i \leq \sum_{m=1}^{m} \overline{CT}_m \times (1+v) \qquad (4)$$

Thus, as long as the individual *CT* at the respective read point $CT_m$ does not cross either threshold as set forth in equation (4), its current deviation can be considered uncritical. The factor v can be selected to amount to 0.1, 0.15, and 0.2.

In a step 404 the read points are ranked according to the models and criteria presented above. Depending on the degree of transparency, the most critical read points can be selected for order progress monitoring.

Hence, cycle times for 5000 orders are simulated and deviations are recorded. A simulation of order cycle times (step 405) and a model performance evaluation (step 406) are conducted ten times: in a step 407 it is checked whether the iteration variable i reached the value of s (with s=10); if not, it is branched to step 405 and the iteration variable i is incremented; in the affirmative, the iteration variable i is set to 1 and it is branched to step 403. Based on the steps 405 to 407 it is possible to identify the model that, on average, performs best for the specific configuration of assigned interval lengths, variability values and system variables.

After these simulations a new configuration with random interval lengths (according to step 402) could be generated and the aforementioned procedure can be repeated.

It is noted that the steps 405 to 407 may be part of an average model performance estimation 408, the steps 403 to 407 can be considered as an estimation of an impact of variables on the performance 409 and that the steps 402 to 407 can be regarded as checking a generalization of performance results 410.

Model Evaluation

The evaluation can be based on hit and miss rates, i.e. the effectiveness of a model in selecting a set of read points that are better in identifying critical deviations while minimizing false alarms.

Fig.5 shows a diagram of a classification of cycle times. At an actual read point $r_m$, it can be determined for an order passing this read point

-   whether it shows a critical deviation (indicated by $y_1$)
-   or it does not show a critical deviation (indicated by $n_1$) .

Accordingly, at the end of the process (corresponding to a read point $r_M$), it can be determined for an order

-   whether it shows a critical deviation (indicated by $y_2$)
-   or it does not show a critical deviation (indicated by $n_2$) .

A hit rate HR can be defined as a ratio of orders that are correctly identified as exhibiting a critical deviation divided by the total amount of orders that show a critical deviation at the end of the process (i.e. $r_M$):

$$HR = \frac{y_1 y_2}{y_1 y_2 + n_1 y_2} \qquad (5)$$

The larger the hit rage HR for a model, the more effective is the selection.

A miss rate MR can be defined as a ratio of orders that are wrongly identified as critical at the actual read point $r_m$ divided by the total amount of orders that arrive on time at the end of the process (i.e. $r_M$), i.e. within the given CT window according to equation (4). In other words, such orders are considered critical at the respective read point, but the deviation can be compensated over the remainder of the process. The miss rate MR can be determined as:

$$MR = \frac{y_1 n_2}{y_1 n_2 + n_1 n_2} \qquad (6)$$

A large miss rate MR indicates that a given selection of read points produces an increasing amount of false alarms.

Further Embodiments and Advantages

Complex and efficient supply chains and production processes, especially those in the automotive industry, require a comprehensive monitoring system for early event identification in order to be able to meet customer requirements. Therefore, the decision problem of selecting appropriate read points for monitoring purposes is addressed. A structured read point selection is examined along the process as well as the effects of system transparency and sensitivity by using an intuitive simulation setup. The well structured selection of read points allows achieving improved results.

A system sensitivity and a degree of transparency are criteria that can advantageously be considered: The more read points are selected (i.e. the higher the degree of transparency), the more critical deviations can be identified. However, at the same time the process is monitored at increasingly earlier stages when the true consequences of deviations are less predictable. Thus, a false alarm rate may increase. The performance of the monitoring system is subject to system sensitivity, i.e. the more sensitive a system reacts to deviations, the less effective the monitoring (selection of read points) becomes.

In addition to the time-related criteria discussed in the example above, other criteria can be utilized, e.g., financial gains or quality. In particular, financial gains could be weighted with regard to additional costs that stem from transparency (e.g., the number of (additional) false alarms) .

The approach presented helps addressing the decision problem of a more structured selection of read points within supply chains and production processes. The solution can be provided as a decision making tool to help planers decide in advance where transparency within a process would be most sensible, in particular where to locate and deploy read points along a technical system. In this manner, the solution presented could be part of an engineering tool.

It is proposed to determine the criticality of a supply chain's read points, i.e. to determine which of the read points are most critical and are more required than others. This allows adjusting the supply chain accordingly, i.e. using the most critical read points and/or providing read points at locations that are most significant with regard to a target objective (e.g., in-time delivery). A simulation allows comparing various approaches of read point installments and compares the findings of the simulation with each other. This helps with regard to the target objective providing an efficient supply chain monitoring thereby reducing the likelihood for false alarms. The invention is applicable for all kinds of technical systems, e.g., industry and automation systems, in particular processing or delivery systems.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

Literature:

[1] Ramanathan R., 2006, ABC inventory classification with multiple-criteria using weighted linear optimization, Computers & Operations Research, 33, 695-700.

[2] Zhou P., Fan L., 2007, A note on multi-criteria ABC inventory classification using weighted linear optimization, European Journal of Operational Research, 182, 1488-1491.

**Claims**

1.  A method for processing a technical system,

    - wherein a set of read points is determined;
    - wherein at least one criterion for the read points is selected;
    - wherein an efficiency of the read points with regard to the at least one criterion is determined;
    - wherein the technical system is processed pursuant to the efficiency of the read points.

2.  The method according to claim 1, wherein processing the technical system comprises at least one of the following:

    - a simulation of the technical system;
    - a deployment of the technical system or a portion thereof;
    - a modification of the technical system;
    - a design or a re-design of the technical system
    - mounting or demounting the read points determined pursuant to their efficiency.

3. The method according to any of the preceding claims, wherein the at least one criterion comprises:

   - an amount of remaining read points;
   - a remaining processing time from the actual read point to the target date;
   - a visibility gap, in particular a sum of an average cycle time of an interval before the actual read point and after the actual read point;
   - a variability of a time interval, in particular a standard deviation of a preceding time interval.

4. The method according to any of the preceding claims, wherein the efficiency of the read points with regard to the at least one criterion is determined using a weighted optimization model.

5. The method according to claim 4, wherein the read points are ranked based on the weighted optimization model.

6. The method according to any of claims 4 or 5, wherein the efficiency of the set of read points or of a subset of this set of read points is determined with regard to the at least one criterion via a simulation.

7. The method according to claim 6, wherein said simulation is conducted with different control parameters, wherein the control parameter indicates an R-model and/or a Z-model portion of the weighted optimization model.

8. The method according to any of the preceding claims, wherein the set of read points is at least partially a set of read points of the technical system.

9. The method according to any of the preceding claims, wherein the efficiency of the read points with regard to the at least one criterion is determined based on different subsets of the set of read points.

10. The method according to any of the preceding claims, wherein the efficiency is determined with regard to a target objective, wherein said target objective comprises at least one of the following:

    - a time objective;
    - a cost objective;
    - a quality objective.

11. The method according to any of the preceding claims, wherein the technical system comprises at least one of the following:

    - a supply chain;
    - a production system or process,
    - a manufacturing system or process,
    - a delivery system or process,
    - an automation system or process.

12. The method according to any of the preceding claims, wherein a stage of the technical system comprises at least one of the following:

    - a component of the technical system;
    - a machine;
    - a material processing or conveying unit;
    - a storage unit;
    - a processing device;
    - an automation device.

13. A device for processing a technical system comprising a processing unit that is arranged for

    - determining a set of read points;
    - selecting at least one criterion for the read points;
    - determining an efficiency of the read points with regard to the at least one criterion;
    - processing the technical system pursuant to the efficiency of the read points.

**14.** The device according to claim 13, wherein the device communicates with or is part of an engineering tool.

**15.** A system comprising at least one device according to any of claims 13 or 14.

# FIG 1

$$\overline{CT}_P$$

$$\overline{CT}_1 \quad \overline{CT}_2 \quad \overline{CT}_3 \quad \cdots \quad \overline{CT}_M$$

$r_0 \quad r_1 \quad r_2 \quad r_3 \quad \cdots \quad r_M \quad t$

# FIG 2

| Read point | Criterion | | | | Criticality |
|---|---|---|---|---|---|
| | 1 | 2 | $\cdots$ | n | c |
| 1 | $y_{11}$ | $y_{12}$ | $\cdots$ | $y_{1n}$ | $c_1$ |
| 2 | $y_{21}$ | $y_{22}$ | $\cdots$ | $y_{2n}$ | $c_2$ |
| $\cdots$ | $\cdots$ | $\cdots$ | $\cdots$ | $\cdots$ | $\cdots$ |
| m | $y_{m1}$ | $y_{m2}$ | $\cdots$ | $y_{mn}$ | $c_i$ |

# FIG 3

EP 2 551 801 A1

## FIG 4

```
┌────────────────────────────────┐
│                                │──── 401
└────────────────────────────────┘
                │
                ▼
┌────────────────────────────────┐
│                                │──── 402
└────────────────────────────────┘
                │
                ▼
┌────────────────────────────────┐
│                                │──── 403
└────────────────────────────────┘
                │
                ▼
┌────────────────────────────────┐
│                                │──── 404
└────────────────────────────────┘
                │
                ▼
┌────────────────────────────────┐
│                                │──── 405
└────────────────────────────────┘
                │
                ▼
┌────────────────────────────────┐
│                                │──── 406
└────────────────────────────────┘
                │
                ▼
Yes                          No
i=1          ◇ i=s ? ◇      i=i+1
                              ──── 407
                              ──── 408
                              ──── 409
                              ──── 410
```

## FIG 5

Critical at point $r_M$

|  | | $y_2$ | $n_2$ |
|---|---|---|---|
| Critical at point $r_m$ | $y_1$ | $y_1 y_2$ | $y_1 n_2$ |
|  | $n_1$ | $n_1 y_2$ | $n_1 n_2$ |

Europäisches
Patentamt

European
Patent Office

Office européen
des brevets

# EUROPEAN SEARCH REPORT

**Application Number**

EP 11 17 5977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The claimed subject matter, with due regard to the description and drawings (Art. 92 EPC), relates inter alia to methods and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose information technology for processing data of an inherently non-technical nature. The information technology employed is considered to have been generally known as it was widely available to everyone at the date of filing/priority of the present application. The notoriety of such prior art cannot reasonably be contested. Accordingly, no documentary evidence is considered required, as the technical aspects identified in the present application are considered part of common general knowledge. For further details see the Notice from the European Patent Office dated 1 October 2007 (OJ 11/2007; p592f) and the accompanying Opinion. ----- | 1-15 | INV. G06Q10/00 |

TECHNICAL FIELDS
SEARCHED (IPC)

G06Q

The present search report has been drawn up for all claims

| Place of search | Date of completion of the search | Examiner |
|---|---|---|
| Munich | 2 December 2011 | Krafft, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................................
& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMANATHAN R.** ABC inventory classification with multiple-criteria using weighted linear optimization. *Computers & Operations Research,* 2006, vol. 33, 695-700

- **ZHOU P. ; FAN L.** A note on multi-criteria ABC inventory classification using weighted linear optimization. *European Journal of Operational Research,* 2007, vol. 182, 1488-1491